# EUROPÄISCHE PATENTANMELDUNG

(11) **EP 1 598 316 A2**
(43) Veröffentlichungstag der Anmeldung: **23.11.2005**
(21) Anmeldenummer: 05010423.1
(22) Anmeldetag: 13.05.2005
(51) Int. Cl.: C02F 1/38, C02F 1/44, C02F 103/32

(54) **Reinigungsvorrichtung für Wasser**

(30) Priorität: 18.05.2004 AT 8762004
(71) Anmelder: Fröschl, Stefan, Ing., 4060 Leonding (AT)
(72) Erfinder: Fröschl, Stefan, Ing., 4060 Leonding (AT)
(74) Vertreter: Secklehner, Günter

(57) **Zusammenfassung**

Die Erfindung bezieht sich auf eine Reinigungsvorrichtung (9) für Wasser (4) mit einer hydromechanischen Behandlungseinrichtung (31) und einem der Behandlungseinrichtung (33) nachgeordneten Filter (32). Die Behandlungseinrichtung (31) weist eine rotationssymmetrische Behandlungskammer (33) mit einer oder mehreren tangential ausgerichteten Einströmöffnungen (40) und einer Ausströmöffnung (42) auf. Weiters bezieht sich die Erfindung auf ein Wasserversorgungssystem (1) für eine Wasch- bzw. Sortieranlage (2) für Obst mit einer Absaugvorrichtung (7) für verschmutztes Wasser (4) bzw. Sediment (15), einer Reinigungsvorrichtung (9) für Wasser (4) und einer Rückführleitung (21) zum Rückleiten des gereinigten Wassers (4) in die Wasch- bzw. Sortieranlage (2), wobei die Reinigungsvorrichtung (9) eine hydromechanische Behandlungseinrichtung (31) und einen Filter (32) umfasst.

## Beschreibung

Die Erfindung betrifft eine Reinigungsvorrichtung für Wasser, eine Absaugvorrichtung für verschmutztes Wasser bzw. Sediment aus einer Wasch- bzw. Sortieranlage für Obst, ein Wasserversorgungssystem für eine Wasch- bzw. Sortieranlage für Obst und ein Verfahren zum Reinigen von Wasser entsprechend den Merkmalen in den Oberbegriffen der Ansprüche 1, 13, 21 und 33.

Es sind Wasch- bzw. Sortieranlagen für Obst bekannt, in denen das Obst in mit Wasser befüllten Kanälen schwimmend transportiert wird. Durch eine, bei Ernte bzw. Transport, erfolgende Verschmutzung des Obstes kommt es zu einem entsprechenden Stoffeintrag in das Wasser des Kanalsystems der Wasch- bzw. Sortieranlage. Das Wasser des Kanalsystems wird sowohl mit festen anorganischen Substanzen, wie Sand, Erde und Ton, aber auch organischen Stoffen, wie Schalen- oder Fruchtfleischresten von beschädigtem Obst, als auch mit gelösten Stoffe verunreinigt. Jede Verletzung des Obstes bedeutet, dass Zellen zerstört werden und ihr Inhalt in das Wasser abgeben wird. So gelangen größere Mengen an Inhaltsstoffen, wie Zucker, Salze oder Öle aus den Verletzungsstellen in das Wasser. Andererseits können mit dem Obst aber auch Reste von Pflanzenschutzmitteln als auch von Dünger in das Wasser des Kanalsystems eingetragen werden. Ein besonderes Problem hinsichtlich der Erfüllung von hygienischen Vorschriften stellt aber auch die Belastung des Wassers durch Keimbefall bzw. Krankheitserreger dar. Letztere können insbesondere durch mit Fäulnis befallene Früchte des zu verarbeitenden Obstes in die Wasch- bzw. Sortieranlage gelangen. Bei Wasch- bzw. Sortieranlagen für Obst besteht somit ein hoher Bedarf an Frischwasser, um einerseits eine ausreichende Reinigung des Obstes zu erzielen. Andererseits stellt sich das Problem der Entsorgung des verunreinigten Wassers. Bei derartigen Wasch- bzw. Sortieranlagen stellt somit das Wasser das wichtigste Betriebsmittel dar und besteht daher ein entsprechender Bedarf nach Einsparungen von Frischwasser bzw. einer Reinigung und Wiederverwendung des verschmutzten Wassers.

Es ist daher die Aufgabe der Erfindung, ein Wasserversorgungssystem für eine Wasch- bzw. Sortiervorrichtung für Obst zu schaffen, durch die der Bedarf an Frischwasser bzw. sonstiger Betriebsmittel deutlich gesenkt werden kann.

Diese Aufgabe der Erfindung wird durch eine Reinigungsvorrichtung, entsprechend den Merkmalen des Anspruches 1, gelöst.

Vorteilhaft ist dabei, dass bei dieser Reinigungsvorrichtung alleine durch den Volumenstrom des in die Reinigungsvorrichtung einfließenden Wassers dieses in Rotation versetzt wird und in der weiteren Folge durch diese Rotationsbewegung einer Behandlung durch Einwirkung mechanischer Beanspruchungen unterzogen werden kann.

Entsprechend der Weiterbildung gemäß Anspruch 2 ist vorgesehen, dass die Behandlungskammer durch einen Unterteil mit einer parabolisch geformten Kammerwand und einem deckelartig geformten Oberteil gebildet ist. Durch diese entsprechend geformte Kammerwand wird in vorteilhafter Weise eine hohe Beschleunigung des in der Behandlungskammer rotierenden Wassers erreicht.

Der gemäß Anspruch 3 vorgesehene rotationssymmetrisch ausgebildete Leitkörper im unteren Bereich der Behandlungskammer hat den Vorteil, dass durch ihn die Umlenkung der Strömungsrichtung des rotierenden Wassers hin zur Auslassöffnung unterstützt wird.

Durch die konkave Ausbildung der Mantelfläche des Leitkörpers und dem stetig verlaufenden Übergang zwischen der Mantelfläche und der Kammerwand, wie in Anspruch 4 gekennzeichnet, werden nahezu homogene Strömungsverhältnisse im unteren Bereich der Behandlungskammer erreicht.

Von Vorteil ist auch die Weiterbildung der Reinigungsvorrichtung nach Anspruch 5, wonach der Unterteil der Behandlungskammer und der Leitkörper einteilig ausgebildet sind, da dadurch ein einfacherer konstruktiver Aufbau mit insgesamt weniger Teilen möglich ist.

Gemäß Anspruch 6 ist vorgesehen, dass der Leitkörper ein axial angeordnetes Durchgangsloch aufweist. Dies hat den Vorteil, dass die Behandlung des in der Behandlungskammer rotierenden Wasser durch die Einleitung von Umgebungsluft bzw. Sauerstoff unterstütz werden kann. Infolge der Sogwirkung des an dem Leitkörper vorbeiströmenden Wassers wird Luft bzw. Sauerstoff selbsttätig in die Behandlungskammer eingesaugt und vermischt sich dabei mit dem Wasser. Aufgrund der oxidierenden Wirkung des derart in das Wasser eingebrachten Sauerstoffs wird eine zusätzliche Reinigungswirkung erreicht.

Von Vorteil sind auch die Weiterbildungen der Reinigungsvorrichtung gemäß den Ansprüchen 7 und 8, da dadurch die Strömungsrichtung des Wassers in dem unteren Bereich der Behandlungskammer auf die Ausströmöffnung hin gerichtet wird und folglich ein weitgehend homogener Volumenstrom erreicht wird.

Gemäß der Weiterbildung der Reinigungsvorrichtungen entsprechend Anspruch 9 ist vorgesehen, dass in dem Ausströmrohr eine, durch eine Querschnittsverengung gebildete Düse angeordnet ist. Dies hat den Vorteil, dass es beim Durchströmen der Düse mit entsprechend hoher Geschwindigkeit zu einer Überführung des Wassers in die Dampfphase kommt, wobei auch eine zerstörende Wirkung auf mikrobiellen Bestandteile in dem Wasser erreicht wird.

Gemäß den Weiterbildungen entsprechend den Ansprüchen 10 und 11 ist vorgesehen, dass der Filter durch einen Membranfilter, insbesondere durch einen Mikro-, einen Ultä-, einen Nano- bzw. einen Reverse-Osmosefilter, gebildet ist bzw. dass der Filter eine Abtrennfähigkeit aus einem Bereich kleiner als 3 µm aufweist. Von Vorteil ist dabei, dass damit eine sehr hohe Reinigungswirkung der Reinigungsvorrichtung erzielt werden kann, wobei die Qualität des verunreinigten Wassers bis zur Trinkwasserqualität gesteigert werden kann.

Durch die gemäß Anspruch 12 vorgesehen Pumpe, zwischen der Behandlungseinrichtung und dem Filter, wird in vorteilhafter Weise eine Erhöhung der Volumenleistung der Reinigungsvorrichtung erreicht.

Eine für sich eigenständige Lösung der Aufgabe der Erfindung ist auch durch die Absaugvorrichtung entsprechen den Merkmalen des Anspruchs 13 gegeben. Von Vorteil ist dabei, dass mit dieser Absaugvorrichtung aus allen Bereichen des Kanalsystems einer Wasch- bzw. Sortieranlage für Obst das Absaugen von abgelagerten Schmutzresten bzw. Sediment und verunreinigtem Wasser möglich ist, ohne dass an den Kanälen der Sortieranlage zusätzliche bauliche Maßnahmen erforderlich sind. Die erfindungsgemäße Absaugvorrichtung ermöglicht somit einen kostengünstigen Betrieb der Wasch- bzw. Sortieranlage. Als besonderer Vorteil dieser sogenannten Nassabsaugung ist insbesondere zu werten, dass die Reinigung der Kanäle der Wasch- bzw. Sortieranlage im befüllten Zustand der Anlage, d.h. ohne Ablassen des Wassers, erfolgen kann.

Die Weiterbildung der Absaugvorrichtung gemäß Anspruch 14 sieht vor, dass eine Längserstreckung der Ansaugdüse sich annähernd über die gesamte Breite des Kanals erstreckt. Dies hat den Vorteil, dass die Absaugleistung von am Boden der Kanäle abgelagerten Feststoffen bzw. Sediment entsprechend vergrößert wird, indem große Bereiche des Bodens der Kanäle durch ein einmaliges Überstreichen mit der Ansaugdüse von dem Sediment befreit werden können.

Vorteilhaft sind auch die Weiterbildungen der Absaugvorrichtung gemäß den Ansprüchen 15 bis 17, da dadurch zusätzliches Bedienpersonal der Absaugvorrichtung nicht erforderlich ist.

Entsprechend der Weiterbildung gemäß Anspruch 18 ist vorgesehen, dass die Absaugvorrichtung auch durch eine Zerkleinerungseinheit zur Verteilung von großen Schmutzpartikel verfügt. Von Vorteil ist dabei, dass damit auch größere Schmutzteilchen, wie z.B. verfaulte Früchte des Obstes, zerkleinert werden können und so leicht und rasch abgesaugt werden können.

Die Weiterbildung der Absaugvorrichtung gemäß Anspruch 19 hat den Vorteil, dass ein Eintrag von Verunreinigungen schon frühzeitig aus dem System entfernt werden kann und so einer weiteren Verunreinigung des Wassers in den Kanälen des Kanalsystems der Wasch- bzw. Sortieranlage vermieden wird.

Durch die Ausbildung der Absaugvorrichtung gemäß Anspruch 20 wird die Absaugwirkung wesentlich erhöht.

Die Aufgabe der Erfindung wird eigenständig auch durch ein Wasserversorgungssystem entsprechend den Merkmalen des Anspruches 21 gelöst. Von Vorteil ist dabei, dass mit dieser Wasserversorgungseinrichtung der Bedarf an Frischwasser beim Betrieb einer Wasch- bzw. Sortieranlage für Obst erheblich verringert werden kann. Das Wasserversorgungssystem ermöglicht die Regeneration des in der Sortieranlage verwendeten Wassers, indem dieses gereinigt und somit Schadstoffe und Verunreinigungen entfernt werden und das gereinigte Wasser wieder in die Sortieranlage zurückgeführt wird.

Weitere vorteilhafte Ausbildungen des Wasserversorgungssystems sind in den Ansprüchen 22 bis 32 beschrieben.

Die Aufgabe der Erfindung wird eigenständig auch durch ein Verfahren zum Reinigen von Wasser entsprechend den Merkmalen des Anspruches 33 gelöst. Von Vorteil ist dabei, dass der Bedarf an Frischwasser zum Betrieb einer Wasch- bzw. Sortieranlage für Obst erheblich reduziert werden kann.

Vorteilhafte Weiterbildungen des Verfahrens zum Reinigen von Wasser sind auch durch die Ansprüche 34 bis 36 beschrieben.

Zum besseren Verständnis der Erfindung wird diese anhand der nachfolgenden Figuren näher erläutert.

Es zeigen in schematisch vereinfachter Darstellung:
- Fig. 1: eine schematisch vereinfachte Darstellung eines Wasserversorgungssystems für eine Wasch- bzw. Sortieranlage für Obst;
- Fig. 2: ein weiteres Ausführungsbeispiel des Wasserversorgungssystems mit einer Biokläranlage;
- Fig. 3: ein Ausführungsbeispiel der Absaugvorrichtung zum manuell absaugen;
- Fig. 4: ein Ausführungsbeispiel einer automatisierten Absaugvorrichtung;
- Fig. 5: die Reinigungsvorrichtung bestehend aus einer hydromechanischen Behandlungseinrichtung und einen Filter;
- Fig. 6: einen Querschnitt der hydromechanischen Behandlungseinrichtung gemäß Fig. 5;
- Fig. 7: ein weiteres Ausführungsbeispiel des Wasserversorgungssystems;
- Fig. 8: ein Detail der Wasch- bzw. Sortieranlage gemäß Fig. 1;
- Fig. 9: einen horizontalen Schnitt durch die Befüllstation gemäß Fig. 8 mit einer weiteren Ausführungsform der Absaugvorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

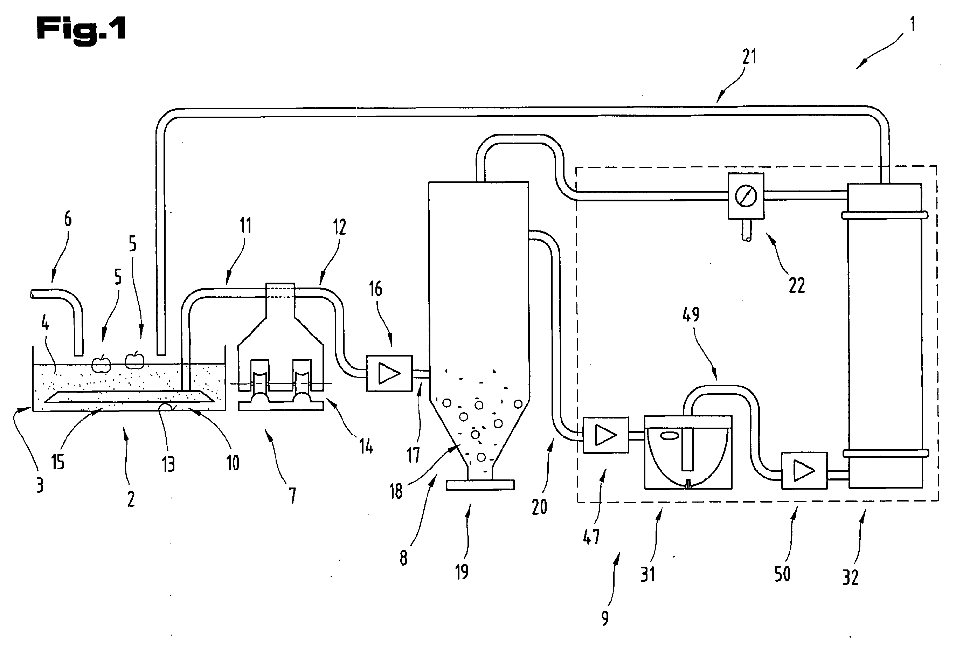

Die Fig. 1 zeigt eine schematisch vereinfachte Darstellung eines Wasserversorgungssystems 1 für eine Wasch- bzw. Sortieranlage 2 für Obst.

Die Wasch- bzw. Sortieranlage 2 umfasst einen, in etwa wannenförmig ausgebildeten Kanal 3, der mit Wasser 4 befüllt ist und in dem Früchte 5 des Obsts treibend bzw. schwimmend durch eine, in dem Kanal 5 erzeugte Strömung des Wassers 4 in eine vordefinierte Richtung transportiert und dabei gleichzeitig gereinigt wird. Die Wasch- bzw. Sortieranlage 2 bildet ein sich verzweigendes System von Kanälen 3, wo die Früchte 5 des Obsts durch entsprechende Messanordnungen bzw. Sensoren kontrolliert und entsprechend zugeordnet werden (in Fig. 1 nicht dargestellt). Der Kanal 3 kann einerseits durch eine Zuleitung 6 mit Frischwasser versorgt werden. Andererseits kann durch das Wasserversorgungssystem 1 verschmutztes Wasser 4 aus dem Kanal 3 entnommen werden, in dem Wasserversorgungssystem 1 behandelt bzw. gereinigt und wieder in den Kanal 3 zurückgeführt werden.

Das Wasserversorgungssystem 1 umfasst dazu eine Absaugvorrichtung 7, einen Absetzbehälter 8 und eine Reinigungsvorrichtung 9 für die Behandlung des verschmutzten Wassers 4.

Die Absaugvorrichtung 7 umfasst zumindest eine Ansaugdüse 10 und ein Saugrohr 11 mit einem daran anschließenden flexiblen Saugschlauch 12. Die Ansaugdüse 10 ist über einen Boden 13 des Kanals 3 beweglich ausgebildet. Die Fig. 1 zeigt den Kanal 3 quer zu seiner Längserstreckung geschnitten dargestellt. Die Bewegung der Ansaugdüse 10 der Absaugvorrichtung 7 erfolgt dem gemäß senkrecht zur Zeichenebene aus der Zeichenebene heraus bzw. in die Zeichenebene hinein. In dem Ausführungsbeispiel der Absaugvorrichtung 7 gemäß Fig. 1 funktioniert diese automatisch, in dem das Saugrohr 11 mit der Ansaugdüse 10, mittels einer Führung 14 parallel zur Längserstreckung des Kanals 3 geführt wird. Die Ansaugdüse 10 wird vorzugsweise in geringem Abstand von dem Boden 13 des Kanals 3 durch das Wasser 4 bewegt, wobei Ablagerungen bzw. Sediment 15 von dem Boden 13 gemeinsam mit Wasser 4 aus dem Kanal 3 abgesaugt werden. Die Absaugvorrichtung 7 kann auch mit einer Zerkleinerungseinheit ausgestattet sein, durch die beispielsweise fauliges Obst, das auf den Boden absinkt, derart in Stücke zerteilt wird, dass es mit dem Sediment 15 und dem Wasser 4 mitabgesaugt werden kann. Die Längserstreckung der Ansaugdüse 10 ist bevorzugt so dimensioniert, dass sie sich annähernd über die gesamte Breite des Kanal 3 an dessen engster Stelle erstreckt. Die Ansaugwirkung wird durch eine Pumpe 16, in die der Saugschlauch 12 mündet, bewirkt. Durch eine Leitung 17, durch die die Pumpe 16 mit dem Absetzbehälter 8 verbunden ist, gelangt das Gemenge aus Wasser 4 und Sediment 15 in den Absetzbehälter 8, wo eine Grobabscheidung von mit dem Wasser 4 transportierten Feststoffteilchen bzw. Partikeln 18 erfolgt. Das Wasser 4 in dem Absetzbehälter 8 kann zur Förderung der Abscheidung der Partikel 18 auch in Rotation versetzt werden. Durch einen Auslass 19 des Absetzbehälters 8 können die im Bodenbereich des Absetzbehälters 8 sich ansammelnden Partikel 18 aus diesem entfernt werden.

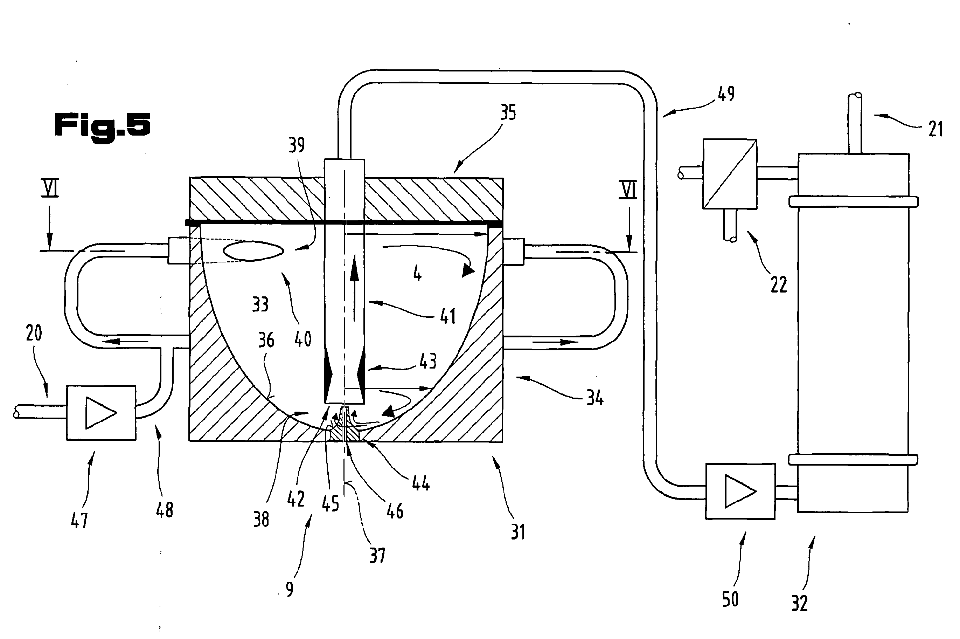

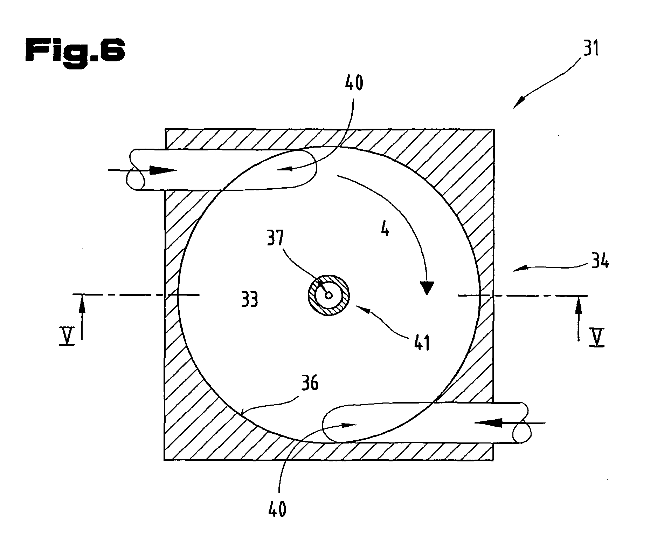

Das in dem Absetzbehälter 8 vorgereinigte Wasser 4 gelangt sodann durch eine Leitung 20 in die Reinigungsvorrichtung 9, wo eine weitere Behandlung bzw. Reinigung erfolgt. Die Funktionsweise der Reinigungsvorrichtung 9 wird nachfolgend anhand der Fig. 5 und 6 im Detail ausgeführt. Das gereinigte Wasser 4 gelangt sodann aus der Reinigungsvorrichtung 9 durch eine Rückführleitung 21 wieder zurück in den Kanal 3 der Wasch- bzw. Sortieranlage 2. Das mit Verschmutzung angereicherte Wasser 4 aus der Reinigungsvorrichtung 9 wird durch einen Auslass 22 einer Abwasserentsorgung zugeführt. Dieses kann aber alternativ dazu auch über eine Leitung 23 wieder in den Absetzbehälter 8 zurückgeführt werden, wo zumindest ein Teil der noch verbliebenen Verunreinigungen mit den Feststoffteilchen bzw. Partikeln 18 abgeschieden wird.

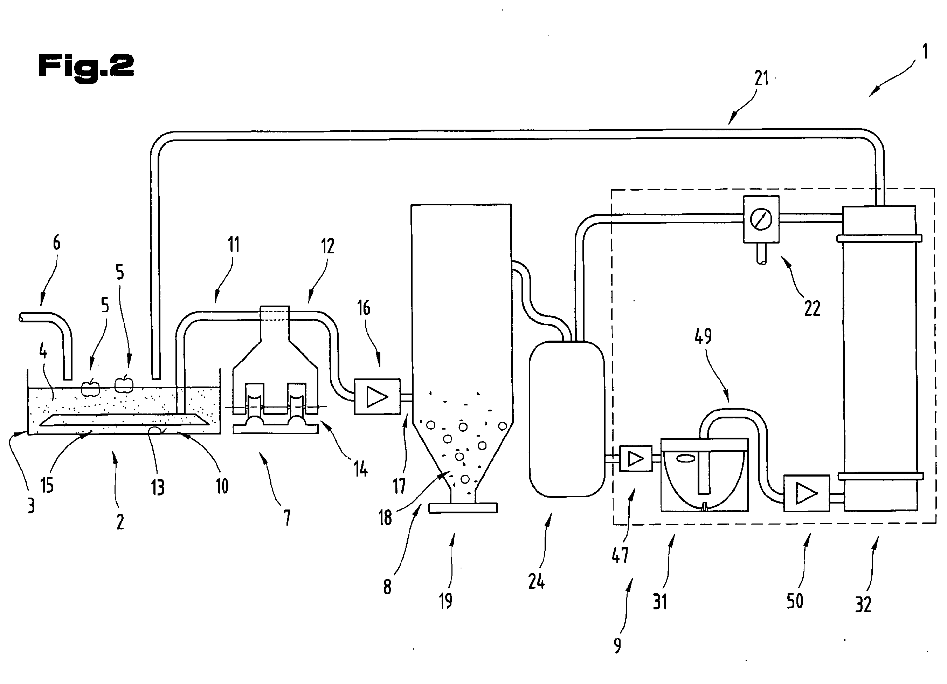

Die Fig. 2 zeigt ein weiteres Ausführungsbeispiel des Wasserversorgungssystems mit einer Biokläranlage 24.

Die Biokläranlage 24 ist zwischen dem Absetzbehälter 8 und der Reinigungsvorrichtung 9 angeordnet. Diese ist dafür ausgelegt, Verunreinigungen des Wassers 4 auf mikrobiologischem Wege abzubauen, bevor dieses in der Reinigungsvorrichtung 9 weiter behandelt wird.

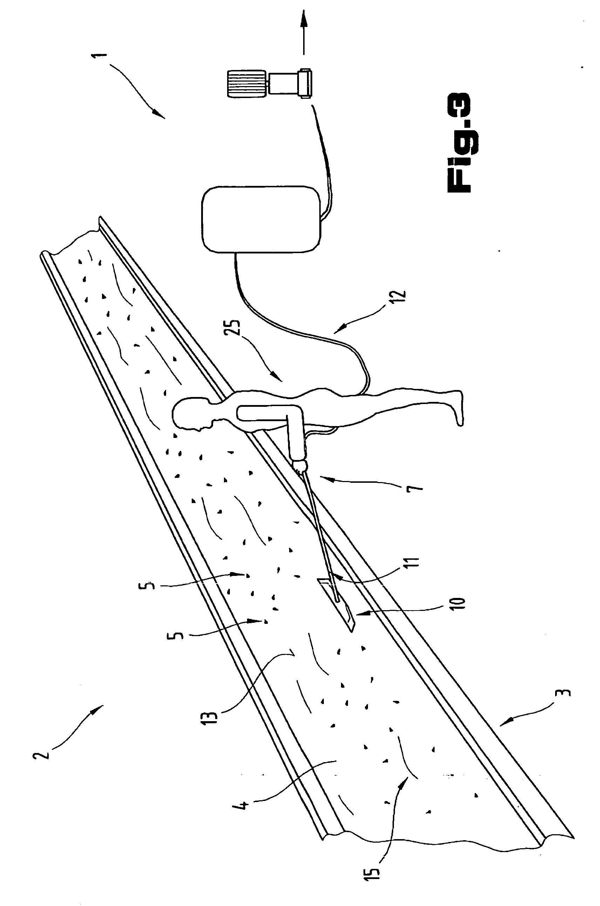

Die Fig. 3 zeigt ein weiteres Ausführungsbeispiel der Absaugvorrichtung 7 zum manuell absaugen.

Die Ansaugdüse 10 dieser Absaugvorrichtung 7 wird dabei durch eine Person 25 manuell über den Boden 13 des Kanals 3 geführt. Das Sediment 15 wird gemeinsam mit einem Teil des Wassers 4 abgesaugt und zur weiteren Behandlung in das Wasserversorgungssystem 1 geleitet.

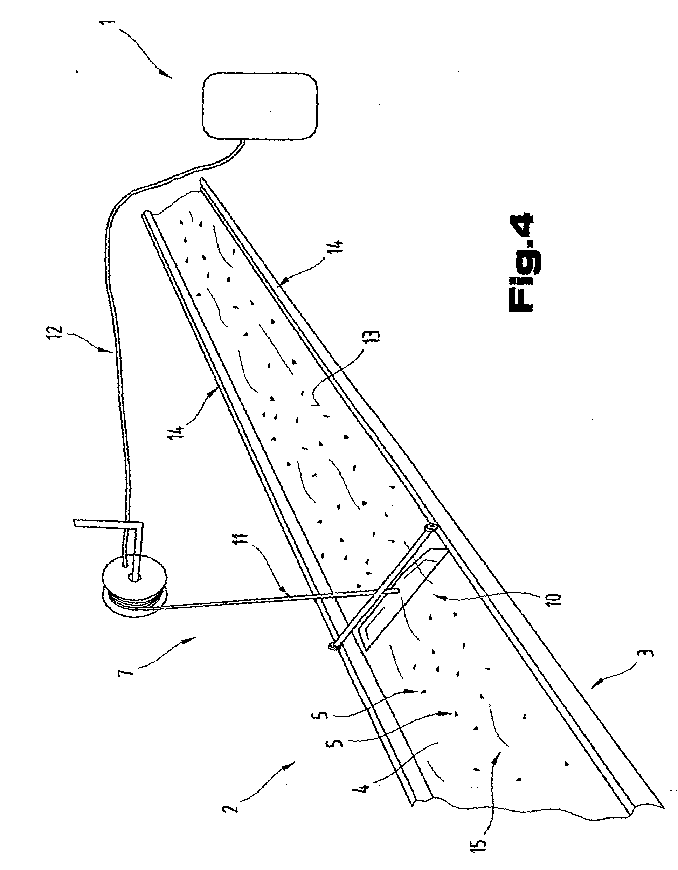

Die Fig. 4 zeigt ein weiteres Ausführungsbeispiel einer automatisierten Absaugvorrichtung 7.

Die Führung 14 dieser Absaugvorrichtung 7 wird dabei durch die beiden seitlichen Ränder des Kanals 3 gebildet. Ein Rahmenteil 26 an dem das Saugrohr 11 der Absaugvorrichtung 7 befestigt ist, ist dabei auf die Führung 14 in Längsrichtung des Kanals 3 verfahrbar aufgesetzt. Zum automatisierten Verfahren der Absaugvorrichtung 7 ist diese mit einem Antrieb (nicht dargestellt) ausgestattet.

Anhand der folgenden Fig. 5 und 6 wird die Funktionsweise der Reinigungsvorrichtung 9 näher beschrieben.

Die Fig. 5 zeigt die Reinigungsvorrichtung 9 bestehend aus einer hydromechanischen Behandlungseinrichtung 31 und einen Filter 32. Die Fig. 6 zeigt einen Querschnitt der Behandlungseinrichtung 31 gemäß Fig. 5.

Das zentrale Element der Behandlungseinrichtung 31 wird gebildet durch eine rotationssymmetrische Behandlungskammer 33, die durch einen Unterteil 34 und einen Oberteil 35 begrenzt wird. Eine Kammerwand 36 des Unterteils 34 weist einen annähernd parabolischen Verlauf auf, wobei der Radius der Kammerwand 36 bezüglich einer Achse 37 der Behandlungskammer 33 zu einem unteren Bereich 38 der Behandlungskammer 33 hin überproportional stark abnimmt. In einem oberen Bereich 39 der Behandlungskammer 33 weist die Kammerwand 36 zumindest eine tangential ausgerichtete Einströmöffnung 40 auf. Im zentralen Bereich der Behandlungskammer 33, d.h. im Bereich der Achse 37, ist ein Ausströmrohr 41 mit einer parallel zur Achse 37 zum unteren Bereich 38 der Behandlungskammer 33 hin weisenden Ausströmöffnung 42 angeordnet. Das Ausströmrohr 41 ist mit dem deckelartig ausgebildeten Oberteil 35 verbunden bzw. in diesen eingesetzt. Im Inneren des Ausströmrohrs 41 ist eine durch eine Querschnittsverengung gebildete Düse 43 angeordnet. Die Düse 43 befindet sich vorzugsweise im unteren Endbereich des Ausströmrohrs 41, d.h. unmittelbar anschließend an den Bereich der Ausströmöffnung 42.

Im unteren Bereich 38 der Behandlungskammer 33 weist der Unterteil 34 einen ebenfalls bezüglich der Achse 37 rotationssymmetrisch ausgebildeten Leitkörper 44 auf. Der in die Behandlungskammer 33 reichende obere Teil des Leitkörpers 44 kann in etwa kegelförmig ausgebildet sein, wobei dessen Spitze auf die Ausströmöffnung 42 des Ausströmrohrs 41 hinaus gerichtet ist. Vorzugsweise ist eine Mantelfläche 45 des Leitkörpers 44 konkav ausgebildet, sodass die Kammerwand 36 und die Mantelfläche 45 einen stetig verlaufenden Übergang bilden. Der Leitkörper 44 weist bevorzugt auch ein axial angeordnetes Durchgangsloch 46 auf. Der Unterteil 34 und der Leitkörper 44 können selbstverständlich auch einteilig ausgebildet sein.

Zur Behandlung von verunreinigtem Wasser 4 wird dieses durch den durch eine Pumpe 47 erzeugten Volumenstrom mittels einer Leitung 48 der einen bzw. mehreren Einströmöffnungen 40 der Behandlungseinrichtung 31 zugeführt. Bedingt durch die tangentiale Ausrichtung der Einströmöffnungen 40 wird das Wasser 4 in der Behandlungskammer 33 in Rotation versetzt, wobei die Rotationsbewegung bzw. die Geschwindigkeit des Wassers 4 sich allmählich immer mehr vergrößert, je mehr sich das Wasser 4 dem unteren Bereich 38 der Behandlungskammer 33 nähert. Die Geschwindigkeitszunahme entspricht der Abnahme des Radius der Kammerwand 36 vom oberen Bereich 39 zum unteren Bereich 38 hin.

Das Wasser 4 erfährt schließlich in dem unteren Bereich 38 an der Mantelfläche 45 des Leitkörpers 44 eine nach oben, eine auf die Ausströmöffnung 42 des Ausströmrohrs 41 gerichtete Ablenkung und strömt mit entsprechend höher Geschwindigkeit in die Ausströmöffnung 42 ein. Beim Durchströmen der Düse 43 erfährt sodann das Wasser 4 eine zusätzliche Beschleunigung, wobei sich die Geschwindigkeit bis in den Bereich der Überschallgeschwindigkeit vergrößert. Im Bereich der Düse 43 kommt es dadurch zu einem kurzzeitigen Verdampfen des Wassers 4. Daran anschließend wird das Wasser 4 durch das Austrittsrohr 41 aus der Behandlungskammer 33 abgeleitet und gelangt über eine Leitung 49 - bedarfsweise unterstützt durch eine weitere Pumpe 50 - in den Filter 32.

Durch die oben beschriebene Ausführung der Behandlungseinrichtung 31 mit der rotationssymmetrisch und parabolisch geformten Kammerwand 36, dem Leitkörper 44 und dem Ausströmrohr 41 mit der Düse 43 erfährt das Wasser 4 in mehrfacher Weise die Einwirkung hoher mechanischer Kräfte bzw. Belastungen. Wegen der kontinuierlich vom oberen Bereich 39 zum unteren Bereich 38 der Behandlungskammer 33 hin sich erhöhenden Rotationsbewegung, wirken zwischen aufeinander folgenden Schichten des Wassers 4 entsprechende Scherkräfte auf dieses ein, aber auch an der Mantelfläche 45 des Leitkörpers 44, als auch in der Düse 43, treten entsprechende Beschleunigungskräfte und eine Verwirbelung des Wassers 4 auf. Durch diese hydromechanische Behandlung des Wassers kommt es zu einer Desintegration bzw. Zerstörung von durch mineralische als auch biologische Bestandteile, wie z.B. Krankheitserreger, gebildeten Verunreinigungen.

Darüber hinaus werden aber auch physikalische Eigenschaften des Wassers, wie dessen Viskosität, als auch die Oberflächenspannung durch diese Behandlung verändert. An dem Wasser 4 kann eine höhere Viskosität und eine geringere Oberflächenspannung festgestellt werden. Die entsprechend veränderten bzw. verkleinerten Partikel, der die Verunreinigung bildenden Bestandteile, werden anschließend durch den Filter 32 aus dem Wasser 4 ausgeschieden. Als Filter 32 können unterschiedliche Filter verwendet werden, insbesondere solche mit einer Abtrennfähigkeit von Partikeln einer Größe zwischen 3 µm und 20 µm. Vorzugsweise werden Membranfilter mit semipermeablen Schichten einer Abtrennfähigkeit im Bereich kleiner als 3 µm verwendet. Derartige Membranfilter werden je nach deren Abtrennfähigkeit bzw. Partikelgrößen, die vom Filter zurückgehalten bzw. durch diesen hindurchtreten können, als Mikrofilter, Ultrafilter, Nanofilter bzw. als Reverseosmosefilter bezeichnet. Das derart behandelte und gereinigte Wasser 4 kann sodann durch die Rückführleitung 21 zur Widerverwendung bereitgestellt werden. Das mit Verunreinigungen angereicherte Wasser 4 wird durch den Auslass 22 abgeleitet bzw. entfernt. Die reinigende Wirkung der Behandlungseinrichtung 31 kann zusätzlich noch dadurch erhöht werden, dass durch das Durchgangsloch 46 des Leitkörpers 41 Luft bzw. Sauerstoff in den Flüssigkeitsstrom des Wassers 4 miteingesaugt wird.

Für die Dimensionierung der Behandlungseinrichtung 31 ist vorgesehen, dass die Behandlungskammer 33 mit einem maximalen Durchmesser ausgebildet ist, dessen Wert in einem Bereich von ca. 8 cm bis etwa 50 cm liegt. Die Behandlungseinrichtung 31 wird mit einem Druck aus einem Bereich von 2 bar bis 25 bar, bevorzugt mit einem Druck von 4 bar bis 15 bar, betrieben. Dabei ist ein Volumendurchsatz von 2 m³/h bis 60 m³/h, bevorzugt von 2,5 m³/h bis 42 m³/h, vorgesehen.

Die Behandlungseinrichtung 31 ist hier als Teil des Wasserversorgungssystems 1 (Fig. 1) beschrieben und im Zusammenhang mit einer Wasch- bzw. Sortieranlage für Obst dargestellt. Es ist aber auch möglich die Behandlungseinrichtung 31 ganz allgemein für sich alleine für die Behandlung bzw. Reinigung von Wasser zu verwenden. Derartige Anwendungsmöglichkeiten sind beispielsweise Prozesse zur Wasserreinigung aus Anlagen zur Verarbeitung von Lebensmittel aber auch für Recyclingwasser, das mit Öl belastet ist, bzw. ganz allgemein Kläranlagen als auch die Wasseraufbereitung von Brackwasser bzw. Meerwasser und die Reinigung von Oberflächenwässern im Fall von mit Öl verschmutztem Wasser, beispielsweise nach Tankerunfällen.

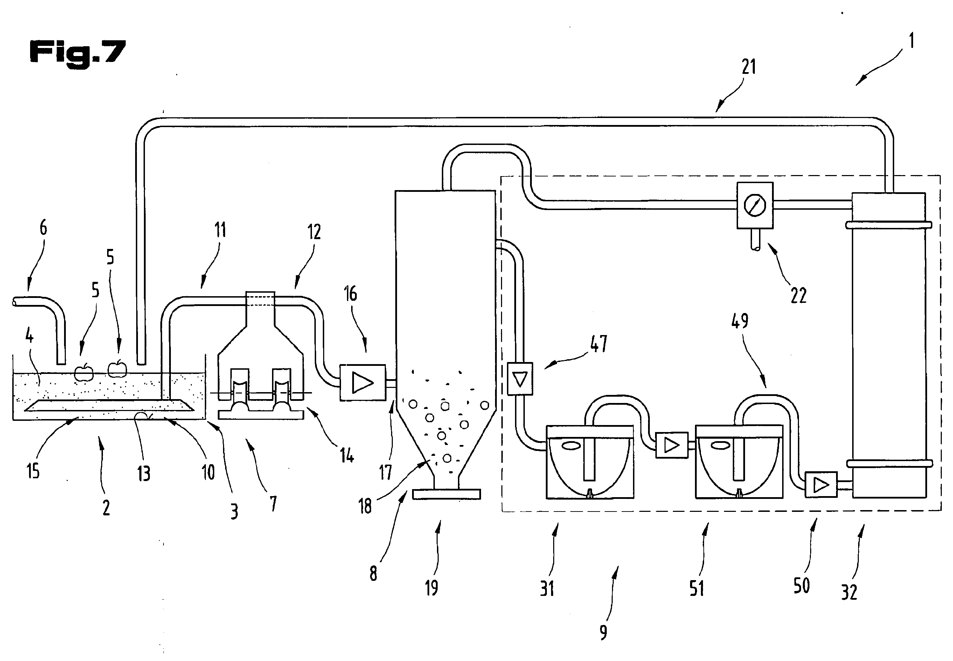

Die Fig. 7 zeigt ein weiteres Ausführungsbeispiel des Wasserversorgungssystems 1.

Die Reinigungsvorrichtung 9 wird bei diesem Ausführungsbeispiel durch zwei hintereinander angeordnete Behandlungseinrichtungen 31, wie oben anhand der Fig. 5 und 6 beschreiben, gebildet. Das Wasser 4 gelangt nach einer zweimaligen, hydromechanischen Behandlung in der Behandlungseinrichtung 31 und eine nachgeordnete weitere Behandlungseinrichtung 51 in dem Filter 32.

In alternativen Ausführungsformen kann auch vorgesehen werden, dass mehr als zwei Behandlungseinrichtungen 31, 51 kaskadenförmig aneinandergereiht sind. Das Wasserversorgungssystem 1 kann zusätzlich oder auch ersatzweise zum Absetzbehälter 8 eine Biokläranlage 24 (Fig. 2) umfassen.

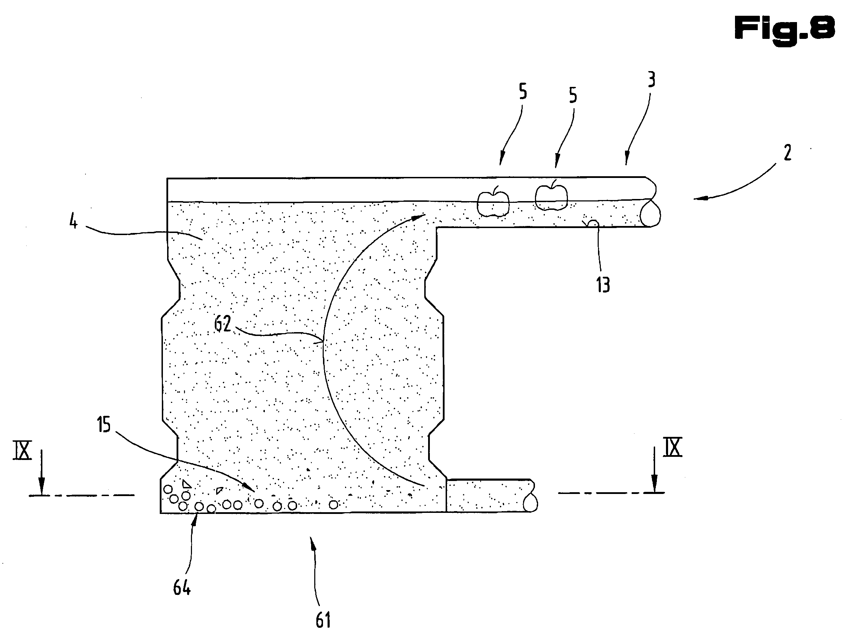

Die Fig. 8 zeigt ein Detail der Wasch- bzw. Sortieranlage 2 gemäß Fig. 1.

Mit dem Kanal 3 der Wasch- bzw. Sortieranlage 2 ist eine Befüllstation 61 zum Beschicken der Sortieranlage 2 mit dem zu reinigendem bzw. zur sortierendem Obst. Die Befüllstation wird gebildet durch ein sogenanntes Tauchbecken, in das die mit dem zu transportierenden Obst befüllten Kisten zur Gänze eingetaucht werden können, woraufhin die Früchte 5 des Obstes durch eine Strömung 62 des Wassers 4 in das Kanalsystem der Kanäle 3 geschwemmt werden. Ein Bodenbereich 63 der Befüllstation 61 befindet sich dabei soweit unterhalb des Niveaus des Bodens 13 des Kanals 3, dass die Kisten zur Gänze in der Befüllstation untergetaucht werden können. Bereits in dem Bodenbereich 63 kommt es infolge der Verschmutzung, aber auch fauliger Früchte 64, zur Ablagerung von Schmutzteilen bzw. von Sediment 15. Erfindungsgemäß ist vorgesehen, dass die Absaugvorrichtung 7 zur Absaugung des Sediments 15 auch über den Bodenbereich 63 der Befüllstation 61 geführt wird.

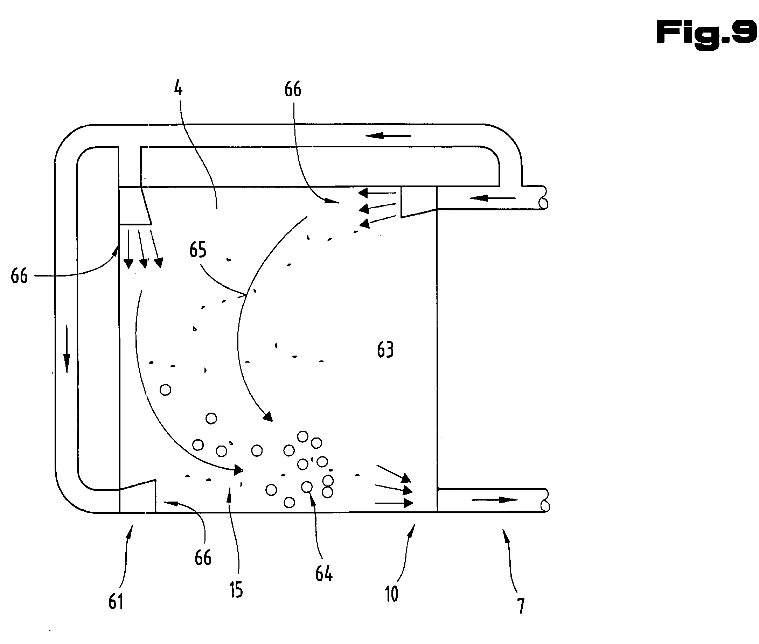

Die Fig. 9 zeigt einen horizontalen Schnitt durch die Befüllstation 61 gemäß Fig. 8 mit einer weiteren Ausführungsform der Absaugvorrichtung 7.

Die Fig. 9 zeigt im Wesentlichen den Bodenbereich 63 der Befüllstation 61 mit in diesem Bereich angesammeltem Sediment 15 bzw. angesammelten faulen Früchten 64. Die Ansaugdüse 10 der Absaugvorrichtung 7 gemäß diesem Ausführungsbeispiel ist fix im Bodenbereich 63 der Befüllstation 61 angeordnet. Der Abtransport des Sediments 15 bzw. der faulen Früchte 64 des Obstes kann zusätzlich auch noch durch die Anwendung einer gerichteten Strömung 65 unterstützt werden. Dazu sind in dem Bodenbereich 63 ein oder mehrere Einströmöffnungen 66 zur Erzeugung der auf die Ansaugdüse 10 hin gerichteten Strömung 65 vorgesehen.

Die Ausführungsbeispiele zeigen mögliche Ausführungsvarianten des Wasserversorgungssystems, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mitumfasst.

Der Ordnung halber sei abschließend darauf hingewiesen, dass zum besseren Verständnis des Aufbaus des Wasserversorgungssystems dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2; 3; 4; 5, 6; 7; 8; 9 gezeigten Ausführungen den Gegenstand von eigenständigen, erfindungsgemäßen Lösungen bilden. Die diesbezüglichen erfindungsgemäßen Aufgaben und Lösungen sind den Detailbeschreibungen dieser Figuren zu entnehmen.

### Bezugszeichenaufstellung

- 1: Wasserversorgungssystem
- 2: Sortieranlage
- 3: Kanal
- 4: Wasser
- 5: Frucht

- 6: Zuleitung
- 7: Absaugvorrichtung
- 8: Absatzbehälter
- 9: Reinigungsvorrichtung
- 10: Ansaugdüse

- 11: Saugrohr
- 12: Saugschlauch
- 13: Boden
- 14: Führung
- 15: Sediment

- 16: Pumpe
- 17: Leitung
- 18: Partikel
- 19: Auslass
- 20: Leitung

- 21: Rückführleitung
- 22: Auslass
- 23: Leitung
- 24: Biokläranlage
- 25: Person

- 26: Rahmenteil

- 31: Behandlungseinrichtung
- 32: Filter
- 33: Behandlungskammer
- 34: Unterteil
- 35: Oberteil

- 36: Kammerwand
- 37: Achse
- 38: Bereich
- 39: Bereich
- 40: Einströmöffnung

- 41: Ausströmrohr
- 42: Ausströmöffnung
- 43: Düse
- 44: Leitkörper
- 45: Mantelfläche

- 46: Durchgangsloch
- 47: Pumpe
- 48: Leitung
- 49: Leitung
- 50: Pumpe

- 51: Behandlungseinrichtung

- 61: Befüllstation
- 62: Strömung
- 63: Bodenbereich
- 64: Frucht
- 65: Strömung

- 66: Einströmdüsen

## Patentansprüche

1. Reinigungsvorrichtung (9) für Wasser (4) mit einer hydromechanischen Behandlungseinrichtung (31) und einem Filter (32), **dadurch gekennzeichnet, dass** die Behandlungseinrichtung (31) eine rotationssymmetrische Behandlungskammer (33) mit einer oder mehreren tangential ausgerichteten Einströmöffnungen (40) und einer Ausströmöffnung (42) aufweist und der Filter (32) der Behandlungseinrichtung (33) nachgeordnet ist.

2. Reinigungsvorrichtung (9) nach Anspruch 1, **dadurch gekennzeichnet, dass** die Behandlungskammer (33) durch einen Unterteil (34) mit einer näherungsweise parabolisch geformten Kammerwand (36) und einem deckelartig geformten Oberteil (35) gebildet ist, wobei die Einströmöffnung (40) im oberen Bereich (39) mit maximalen Durchmesser der Behandlungskammer (33) angeordnet ist.

3. Reinigungsvorrichtung (9) nach Anspruch 2, **dadurch gekennzeichnet, dass** im unteren Bereich (38) der Behandlungskammer (33) der Unterteil (34) einen bezüglich einer Achse (37) der Behandlungskammer (33) rotationssymmetrisch ausgebildeten Leitkörper (44) aufweist, wobei ein oberer Teil des Leitkörpers (44) in die Behandlungskammer (33) reicht.

4. Reinigungsvorrichtung (9) nach Anspruch 3, **dadurch gekennzeichnet, dass** eine Mantelfläche (45) des Leitkörpers (44) konkav ausgebildet ist und die Kammerwand (36) und die Mantelfläche (45) einen stetig verlaufenden Übergang bilden.

5. Reinigungsvorrichtung (9) nach Anspruch 3 oder 4, **dadurch gekennzeichnet, dass** der Unterteil (34) und der Leitkörper (44) einteilig ausgebildet sind.

6. Reinigungsvorrichtung (9) nach einem der Ansprüche 3 bis 5, **dadurch gekennzeichnet, dass** der Leitkörper (44) ein axial angeordnetes Durchgangsloch (46) aufweist.

7. Reinigungsvorrichtung (9) nach einem der Ansprüche 1 bis 6, **dadurch gekennzeichnet, dass** sich die Ausströmöffnung (42) an einem im unteren Bereich (38) der Achse (37) der Behandlungskammer (33) angeordneten Ausströmrohr 41 befindet, wobei die Ausströmöffnung (42) parallel bezüglich der Achse (37) und zum unteren Bereich (38) der Behandlungskammer (33) hin weisend ausgerichtet ist.

8. Reinigungsvorrichtung (9) nach einem der Ansprüche 3 bis 7, **dadurch gekennzeichnet, dass** der Leitkörpers (44) und die Ausströmöffnung (42) einander unmittelbar gegenüberstehend angeordnet sind.

9. Reinigungsvorrichtung (9) nach einem der Ansprüche 7 oder 8, **dadurch gekennzeichnet, dass** in dem Ausströmrohr 41 eine durch eine Querschnittsverengung gebildete Düse (43) angeordnet ist.

10. Reinigungsvorrichtung (9) nach einem der vorhergehenden Ansprüche, **dadurch gekennzeichnet, dass** der Filter (32) durch einen Membranfilter, insbesondere durch einen Mikro-, einen Ulta-, einen Nano- bzw. einen Reverse-Osmosefilter, gebildet ist.

11. Reinigungsvorrichtung (9) nach einem der vorhergehenden Ansprüche, **dadurch gekennzeichnet, dass** der Filter (32) eine Abtrennfähigkeit, entsprechend einer Partikelgröße aus einem Bereich kleiner als 3 µm, aufweist.

12. Reinigungsvorrichtung (9) nach einem der vorhergehenden Ansprüche, **dadurch gekennzeichnet, dass** zwischen der Behandlungseinrichtung (31) und dem Filter (32) eine Pumpe (50) angeordnet ist.

13. Absaugvorrichtung (7) für verschmutztes Wasser (4) bzw. Sediment (15) aus einer Wasch- bzw. Sortieranlage (2) für Obst, wobei die Absaugvorrichtung (7) mit einem Wasserversorgungssystem (1) zur Behandlung bzw. Reinigung des Wassers (4) verbunden ist, **dadurch gekennzeichnet, dass** an einem Saugrohr (11) eine Ansaugdüse (10) angeordnet ist und das Saugrohr (11) durch einen flexiblen Saugschlauch (12) mit dem Wasserversorgungssystem (1) verbunden ist.

14. Absaugvorrichtung (7) nach Anspruch 13, **dadurch gekennzeichnet, dass** eine Längserstreckung der Ansaugdüse (10) sich annähernd über die gesamte Breite des Kanals (3) erstreckt.

15. Absaugvorrichtung (7) nach Anspruch 13 oder 14, **dadurch gekennzeichnet, dass** das Saugrohr (11) bzw. die Ansaugdüse (10) mit einer Führung (14) verbunden ist.

16. Absaugvorrichtung (7) nach Anspruch 15, **dadurch gekennzeichnet, dass** die Ansaugdüse (10) parallel bezüglich einer Längserstreckung eines Kanals (3) der Wasch- bzw. Sortieranlage (2) verfahrbar ist.

17. Absaugvorrichtung (7) nach Anspruch 15 oder 16, **dadurch gekennzeichnet, dass** die (14) mit einem Antrieb ausgestattet ist und die Ansaugdüse (10) automatisch verfahrbar ist.

18. Absaugvorrichtung (7) nach Anspruch 13 bis 17, **dadurch gekennzeichnet, dass** diese eine Zerkleinerungseinheit zur Zerteilung von großen Schmutzpartikeln aufweist.

19. Absaugvorrichtung (7) nach Anspruch 13, **dadurch gekennzeichnet, dass** die Ansaugdüse (10) in einem Bodenbereich (63) einer Befüllstation (61) bzw. eines Tauchbeckens zur Entleerung von mit Obst befüllten Kisten angeordnet ist.

20. Absaugvorrichtung (7) nach Anspruch 19, **dadurch gekennzeichnet, dass** in dem Bodenbereich (63) eine oder mehrere Einströmöffnungen (40) zur Erzeugung einer das Ausschwämmen des Sediments (15) unterstützenden, gerichteten Strömung (65) angeordnet ist bzw. sind.

21. Wasserversorgungssystem (1) für eine Wasch- bzw. Sortieranlage (2) für Obst mit einer Absaugvorrichtung (7) für verschmutztes Wasser (4) bzw. Sediment (15), einer Reinigungsvorrichtung (9) für Wasser (4) und einer Rückführleitung (21) zum Rückleiten des gereinigten Wassers (4) in die Wasch- bzw. Sortieranlage (2), **dadurch gekennzeichnet, dass** die Reinigungsvorrichtung (9) eine hydromechanische Behandlungseinrichtung (31) und einen Filter (32) umfasst.

22. Wasserversorgungssystem (1) nach Anspruch 21, **dadurch gekennzeichnet, dass** die Behandlungseinrichtung (31) eine rotationssymmetrische Behandlungskammer (33) mit einer oder mehreren tangential ausgerichteten Einströmöffnungen (40) und einer Ausströmöffnung (42) aufweist und der Filter (32) der Behandlungseinrichtung (31) nachgeordnet ist.

23. Wasserversorgungssystem (1) nach Anspruch 21 oder 22, **dadurch gekennzeichnet, dass** die Behandlungskammer (33) durch einen Unterteil (34) mit einer näherungsweise parabolisch geformten Kammerwand (36) und einem deckelartig geformten Oberteil (35) gebildet ist.

24. Wasserversorgungssystem (1) nach einem der Anspruch 21 bis 23, **dadurch gekennzeichnet, dass** im unteren Bereich (38) der Behandlungskammer (33) der Unterteil (34) einen bezüglich einer Achse (37) der Behandlungskammer (33) rotationssymmetrisch ausgebildeten Leitkörper (44) aufweist, wobei ein oberer Teil des Leitkörpers (44) in die Behandlungskammer (33) reicht.

25. Wasserversorgungssystem (1) nach einem der Anspruch 21 bis 24, **dadurch gekennzeichnet, dass** sich die Ausströmöffnung (42) an einem im Bereich (38) der Achse (37) der Behandlungskammer (33) angeordneten Ausströmrohr 41 befindet, wobei die Ausströmöffnung (42) parallel bezüglich der Achse (37) und zum unteren Bereich (38) der Behandlungskammer (33) hin weisend ausgerichtet ist.

26. Wasserversorgungssystem (1) nach einem der Anspruch 21 bis 25, **dadurch gekennzeichnet, dass** der Filter (32) durch ein Membranfilter gebildet ist.

27. Wasserversorgungssystem (1) nach einem der Anspruch 21 bis 26, **dadurch gekennzeichnet, dass** der Filter (32) eine Abtrennfähigkeit aus einem Bereich von 0,1 µm bis 20 µm aufweist.

28. Wasserversorgungssystem (1) nach einem der Anspruch 21 bis 27, **dadurch gekennzeichnet, dass** die Absaugvorrichtung (7) ein Saugrohr (11) umfasst und an dem Saugrohr (11) eine Ansaugdüse (10) angeordnet ist und das Saugrohr (11) durch einen flexiblen Saugschlauch (12) mit dem Wasserversorgungssystem (1) verbunden ist.

29. Wasserversorgungssystem (1) nach einem der Anspruch 21 bis 28, **dadurch gekenn** **zeichnet, dass** das Saugrohr (11) bzw. die Ansaugdüse (10) mit einer Führung (14) verbunden.

30. Wasserversorgungssystem (1) nach einem der Anspruch 21 bis 29, **dadurch gekennzeichnet, dass** die Ansaugdüse (10) parallel bezüglich einer Längserstreckung eines Kanals (3) der Wasch- bzw. Sortieranlage (2) verfahrbar ist.

31. Wasserversorgungssystem (1) nach einem der Anspruch 21 bis 30, **dadurch gekennzeichnet, dass** eine Längserstreckung der Ansaugdüse (10) sich annähernd über die gesamte Breite des Kanal (3) erstreckt.

32. Wasserversorgungssystem (1) nach einem der Anspruch 21 bis 31, **dadurch gekennzeichnet, dass** die Ansaugdüse (10) ein einem Bodenbereich (63) einer Befüllstation bzw. eines Tuchbeckens zur Entleerung von mit Obst befüllten Kisten angeordnet ist.

33. Verfahren zum Reinigen von Wasser (4) einer Wasch- bzw. Sortieranlage (2) für Obst, wobei die Wasch- bzw. Sortieranlage (2) Kanäle aufweist, in denen das Obst in Wasser (4) schwimmend transportiert wird, **dadurch gekennzeichnet, dass** ein Gemisch aus Wasser (4) und Sedimenten (15) während des Betriebs der Sortieranlage (2) bzw. in mit dem Wasser (4) befüllten Zustand der Kanäle abgesaugt wird.

34. Verfahren nach Anspruch 33, **dadurch gekennzeichnet, dass** das Gemisch aus Wasser (4) und Sedimenten (15) zur Grobabscheidung von Sedimenten (15) bzw. Verschmutzung durch einen Absetzbehälter (8) geleitet wird.

35. Verfahren nach Anspruch 33 oder 34, **dadurch gekennzeichnet, dass** das verschmutzte Wasser (4) in einer hydromechanischen Behandlungseinrichtung (31) mit einer rotationssymmetrischen Behandlungskammer (33) hohen Beschleunigungskräften und innerer Scherbeanspruchung unterworfen wird.

36. Verfahren nach einem der Anspruch 33 bis 35, **dadurch gekennzeichnet, dass** das Wasser (4) anschließend durch einen Filter (32) geleitet wird.
